# FASCICULE DE BREVET EUROPEEN

(11) **EP 0 465 628 B1**
(45) Date de publication et mention de la délivrance du brevet: **30.11.1994**
(21) Numéro de dépôt: 91903335.7
(22) Date de dépôt: 29.01.1991
(51) Int. Cl.: B23K 26/00, B23K 26/12, H01M 6/18

(54) **PROCEDE DE DECOUPE D'UN ENSEMBLE MULTICOUCHE CONSTITUE D'UNE PLURALITE DE COUCHES MINCES ET CONSISTANT EN UN GENERATEUR ELECTROCHIMIQUE EN COUCHES MINCES OU EN UNE PARTIE CONSTITUTIVE D'UN TEL GENERATEUR**
VERFAHREN ZUM SCHNEIDEN EINES AUS EINER MEHRZAHL VON DÜNNFILMEN BESTEHENDEN MEHRSCHICHTIGEN BAUELEMENTES UND EINEN DÜNNFILMELEKTROCHEMISCHEN GENERATOR ODER EINEN BAUTEIL DESSEN ENTHALTEND
METHOD FOR CUTTING A MULTILAYER ASSEMBLY COMPOSED OF A PLURALITY OF THIN FILMS AND COMPRISING A THIN FILM ELECTROCHEMICAL GENERATOR OR A COMPONENT PART THEREOF

(30) Priorité: 30.01.1990 FR 9001049
(43) Date de publication de la demande: 15.01.1992
(73) Titulaire: ELF AQUITAINE, 92400 Courbevoie (FR); HYDRO-QUEBEC, Montréal Québec H2Z 1A4 (CA)
(72) Inventeur: MULLER, Daniel, F-64000 Pau (FR); KAPFER, Bruno, Longueil, Québec J4M 1A8 (CA)
(74) Mandataire: Boillot, Marc
(86) Numéro de dépôt international: FR9100051
(87) Numéro de publication internationale: WO9111287

(56) Documents cités:
- EP-A- 0 224 113
- FR-A- 2 616 970
- US-A- 4 048 464
- US-A- 4 332 999
- US-A- 4 680 442
- PATENT ABSTRACTS OF JAPAN, vol. 6, no. 182 /E-131)(1060), 18 September 1982 & JP-A-57 96472 (HITACHI MAXELL K.K.) 15 June 1982

## Description

L'invention concerne un procédé pour réaliser la découpe d'un ensemble multicouche constitué d'une pluralité de couches minces et consistant en un générateur électrochimique en couches minces ou en une partie constitutive d'un tel générateur, ledit ensemble multicouche comportant au moins une couche qui est constituée d'un feuillard métallique ou renferme un matériau macromoléculaire.

Un groupe important d'ensembles multicouches en couches minces, qui comportent au moins une couche constituée d'un feuillard métallique ou renfermant un matériau macromoléculaire, est celui des générateurs électrochimiques de courant en couches minces, rechargeables ou non, parmi lesquels on peut mentionner les générateurs électrochimiques de courant, qui sont décrits dans la citation EP-A-0013199 et font appel à un matériau macromoléculaire à conduction ionique consistant en une solution solide d'un sel alcalin ionisable M⁺X⁻, notamment sel de lithium, au sein d'un matériau polymère plastique constitué, au moins en partie, d'un ou plusieurs polymères et/ou copolymères de monomères comportant au moins un hétéroatome, notamment oxygène ou azote, apte à former des liaisons du tue donneur -accepteur avec le cation M⁺.

Dans leur structure la plus simple, les générateurs électrochimiques en couches minces tels que précités sont formés d'un ensemble multicouche élémentaire comportant une couche d'un électrolyte solide polymère, comprenant un matériau macromoléculaire à conduction ionique tel que mentionné ci-dessus, insérée entre une couche d'une électrode positive, qui peut consister notamment en un mélange d'une substance à conduction électronique comme le noir de carbone avec divers matériaux électrochimiquement actifs, et une couche d'une électrode négative, formée par exemple d'un feuillard d'un métal alcalin, notamment de lithium, ou d'un alliage à base d'un métal alcalin, ledit ensemble élémentaire étant disposé en sandwich entre deux collecteurs de courant, qui peuvent être des collecteurs métalliques ou encore des collecteurs en plastique métallisé. Dans certaines configurations, l'électrode négative constituée d'un feuillard d'un métal alcalin pur ou allié peut elle-même constituer à la fois l'électrode négative et le collecteur de courant correspondant dudit ensemble élémentaire.

Pour obtenir des générateurs de grande capacité énergétique faisant appel à des surfaces relativement importantes, on réalise soit des empilements à plat, soit des enroulements ou encore des pliages divers de l'ensemble multicouche élémentaire.

On peut également réaliser un ensemble multicouche de base comportant une couche d'un métal de faible ductilité et, dans cet ordre et d'un même côté de ladite couche, une première couche d'électrode positive, une première couche d'électrolyte solide polymère, une couche d'électrode négative, une seconde couche d'électrolyte solide polymère, une seconde couche d'électrode positive et un film plastique protecteur pelable. Par enroulement ou pliage dudit ensemble multicouche de base ou par empilement d'un tel ensemble multicouche, après retrait du film pelable, on peut obtenir des générateurs électrochimiques de grandes capacités énergétiques.

Les générateurs électrochimiques en couches minces, que l'on soumet par la suite aux opérations de pliage, d'enroulement ou d'empilement pour constituer des générateurs de grande capacité énergétique, peuvent être assemblés à partir des diverses couches destinées à les constituer prises séparément ou encore à partir de sous-ensembles multicouches associant déjà plusieurs desdites couches constitutives, ces opérations d'assemblage étant réalisées en continu. En particulier, on peut assembler les générateurs électrochimiques en couches minces comme décrit dans les citations FR-A-2616970 et FR-A-2616971.

Au cours de la fabrication des générateurs électrochimiques en couches minces interviennent des opérations de découpe, qui peuvent être réalisées soit sur les générateurs électrochimiques complets soit sur les parties constitutives desdits générateurs.

Les opérations de découpe réalisées en faisant appel aux techniques traditionnelles de découpe par cisaillage à l'aide de couteaux ou encore par poinçonnage à l'emportepièce présentent divers inconvénients. Tout d'abord, l'outillage utilisé provoque toujours une contrainte à l'endroit de la découpe, qui se traduit à terme par une déformation locale et donc un risque important de court-circuit, avec pour conséquence que la découpe des composantes doit se faire de préférence avant l'assemblage du générateur. De plus, les matériaux polymères et les métaux, notamment métaux alcalins, qui entrent dans la composition des composantes des générateurs, conduisent à un encrassage rapide des outils, couteaux ou emporte-pièces, de découpe. Enfin, la découpe ne peut se faire que suivant une seule direction si l'on opère en continu. En cas de découpe suivant plusieurs directions, il faut un mouvement complexe soit de l'outil soit de l'ensemble multicouche à découper pour effectuer une telle opération.

Par ailleurs, l'emploi d'une technique de découpe par jet d'eau est à exclure compte tenu de la présence de métal alcalin et notamment de lithium ou d'un alliage d'un tel métal dans la couche d'électrode négative du générateur électrochimique.

Un procédé mettant en oeuvre un faisceau laser est proposé dans la citation JP-A-57-96472 pour réaliser la découpe, à un format désiré, d'un ensemble multicouche constitué d'une pluralité de couches minces et consistant en un générateur électrochimique en couches minces comportant une cathode formée d'un feuillard de lithium. Dans ce procédé, on focalise le faisceau laser sur l'une des faces de l'ensemble à découper, en un point de cette face appartenant au profil de découpe à effectuer, de manière à réaliser en ce point une désintégration ponctuelle de la matière dudit ensemble et l'on anime le faisceau laser d'un mouvement relatif par rapport à l'ensemble à découper de telle sorte que ledit point décrive une trajectoire correspondant au profil de découpe à réaliser.

Dans la citation EP-A-0224113, on décrit un procédé de découpe d'un matériau en feuille du type prépreg à l'aide d'au moins un faisceau laser, lequel procédé consiste, comme dans la citation JP-A-5796472, à focaliser le faisceau laser sur l'une des faces du matériau en feuille et à animer le faisceau laser d'un mouvement relatif par rapport au matériau en feuille pour réaliser la découpe dudit matériau et comporte, en outre, une étape de création d'une atmosphère inerte, par exemple atmosphère d'azote, dans une zone entourant le point d'impact du faisceau laser sur la face du matériau en feuille en regard dudit faisceau et sur une zone correspondante de la face opposée dudit matériau en feuille. L'utilisation de cette atmosphère inerte permet d'éviter ou tout au moins de minimiser tout phénomène de carbonisation de la tranche du matériau découpé.

L'invention a pour objet un procédé mettant en oeuvre un faisceau laser en atmosphère contrôlée réactive pour réaliser la découpe, à un format désiré, d'un ensemble multicouche constitué d'une pluralité de couches minces et consistant en un générateur électrochimique en couches minces ou en une partie constitutive d'un tel générateur, ledit ensemble multicouche comportant au moins une couche qui est constituée d'un feuillard métallique ou renferme un matériau macromoléculaire.

Le procédé selon l'invention est du type dans lequel on focalise au moins un faisceau laser sur l'une des faces de l'ensemble à découper, en un point de cette face appartenant au profil de découpe à effectuer et appelé point d'impact dudit faisceau sur ladite face, de manière à réaliser en ce point une désintégration ponctuelle de la matière dudit ensemble et l'on anime le faisceau laser d'un mouvement relatif par rapport à l'ensemble à découper de telle sorte que ledit point d'impact décrive une trajectoire correspondant au profil de découpe à réaliser, et il se caractérise en ce que l'on maintient une atmosphère contrôlée dans une zone entourant ce point d'impact, laquelle atmosphère contrôlée est une atmosphère qui réagit avec l'un au moins des composants de l'ensemble multicouche pour former, sur la tranche de la partie d'ensemble découpée, une couche protectrice électroniquement isolante ou bien ioniquement isolante ou les deux.

Le mouvement relatif du faisceau laser par rapport à l'ensemble à découper peut être produit soit en maintenant immobile le faisceau laser et en déplaçant l'ensemble à découper ou en déplaçant le faisceau laser et en maintenant immobile l'ensemble à découper ou bien encore en déplaçant à la fois le faisceau laser et l'ensemble à découper.

Le faisceau laser utilisable dans le procédé selon l'invention peut être un faisceau continu ou un faisceau pulsé. Il peut être émis par l'une quelconque des sources laser de puissance appropriée, par exemple source laser à gaz, source laser du type à semi-conducteur, source laser à solide, source laser à colorant organique. Conviennent en particulier les sources laser à gaz, par exemple sources laser à CO₂, ayant une puissance inférieure à 1000 W et notamment comprise entre 0,5 et 600 W.

La vitesse de découpe, qui correspond à la vitesse de déplacement relatif du point d'impact du faisceau laser sur la face de l'ensemble à découper, peut varier assez largement en fonction de l'énergie contenue dans le faisceau laser, ladite énergie dépendant de la puissance de la source laser utilisée. Ainsi, la vitesse de découpe peut aller notamment d'environ 1cm/s à 1m/s.

L'atmosphère contrôlée réactive à l'endroit de la découpe, c'est-à-dire dans la zone entourant le point d'impact du faisceau laser sur la face de l'ensemble à découpe, est avantageusement réalisée par soufflage, à cet endroit, d'un gaz ayant les caractéristiques désirées. En particulier, l'atmosphère contrôlée réactive peut renfermer une quantité contrôlée d'un agent oxydant gazeux tel que l'oxygène. Dans le cas d'ensembles multicouches du type des générateurs électrochimiques en couches minces au lithium ou des précurseurs de tels générateurs, on peut avantageusement utiliser une atmosphère réactive consistant en CO₂ seul ou bien en un gaz inerte, notamment argon, renfermant une quantité contrôlée de CO₂ ou de CO₂ et d'oxygène pour former une couche de carbonate de lithium électrochimiquement inerte. Lorsque la formation de la couche protectrice à l'endroit de la découpe nécessite la présence d'un agent oxydant gazeux, notamment oxygène, dans l'atmosphère réactive, la concentration en cet agent oxydant gazeux dans le gaz destiné à former ladite atmosphère réactive est choisie de manière à permettre la formation des composés chimiques constituant la couche protectrice désirée sans que cette atmosphère réactive devienne globalement oxydante.

Comme indiqué plus haut, le procédé selon l'invention s'applique à la découpe des divers types de générateurs électrochimiques complets en couches minces, lesdits générateurs étant notamment des générateurs électrochimiques au lithium à électrolyte solide polymère, ou pour la découpe des parties constitutives de tels générateurs et, par exemple, des sous-ensembles comprenant, dans cet ordre, un collecteur de courant sous la forme d'un feuillard en un métal tel que nickel, cuivre ou aluminium, ou d'un film métallisé d'un matériau plastique tel que polypropylène ou polyéthylène, une couche d'une électrode positive et une couche d'un électrolyte solide polymère, ou encore des ensembles intermédiaires précurseurs d'électrode négative comportant un film mince de lithium enserré entre deux films de matière plastique inerte, par exemple polypropylène ou polyéthylène, dont l'un est facilement pelable et l'autre présente une adhésion contrôlée au lithium.

Lorsque l'ensemble multicouche à découper, à savoir générateur électrochimique complet ou partie constitutive dudit générateur, renferme une couche ou un dépôt apparent d'aluminium ou de cuivre, l'attaque de l'ensemble multicouche par le faisceau laser se fait de préférence du côté opposé à celui présentant la couche ou le dépôt apparent d'aluminium ou de cuivre. Si les deux côtés de l'ensemble multicouche portent chacun une couche ou un dépôt apparent d'aluminium ou de cuivre, on opère en revêtant l'un desdits côtés à l'aide d'un film en un matériau plastique inerte pelable, par exemple polypropylène ou polyéthylène, puis en réalisant l'attaque de l'ensemble multicouche par le faisceau laser du côté ainsi revêtu par le film en matériau plastique. Par contre, lorsque l'ensemble multicouche porte une couche ou un dépôt apparent de nickel, l'attaque de l'ensemble multicouche peut se faire directement du côté portant la couche ou le dépôt de nickel.

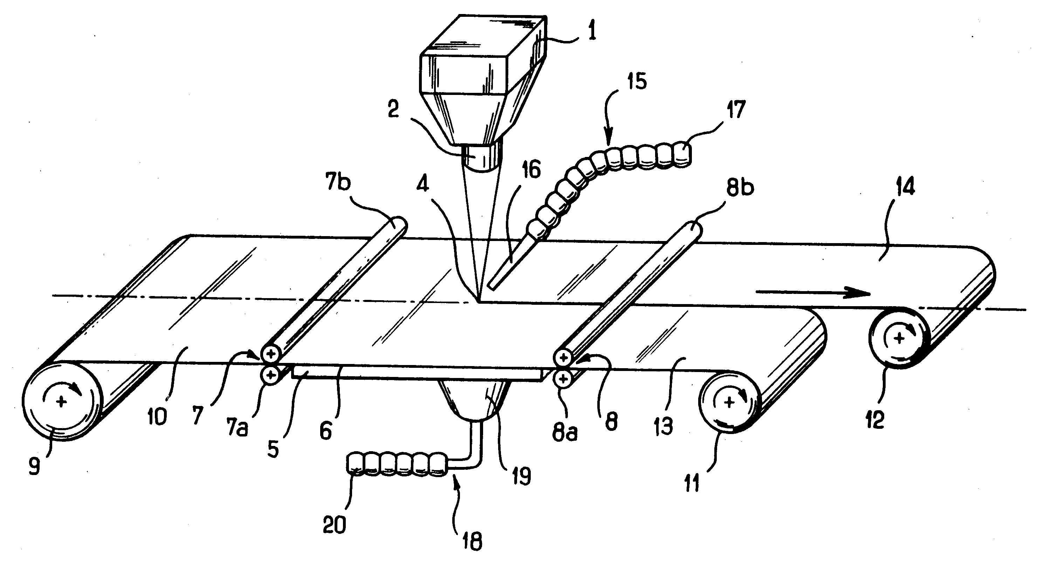

D'autres avantages et caractéristiques de l'invention apparaîtront à la lecture de la description ci-après d'un mode de réalisation de ladite invention donné en référence à la figure du dessin annexé représentant schématiquement un dispositif de découpe d'un ensemble multicouche.

Le dispositif schématisé sur la figure comporte une source laser 1, par exemple une source laser à gaz, associée à un système 2 de focalisation à lentilles, qui focalise le faisceau de lumière cohérente émis par le laser en un point 4. Une plaque support 5 est disposée de telle sorte, sous le système de focalisation 2, que la face supérieure plane 6 de ladite plaque contienne le point de focalisation 4 du faisceau laser et que ladite face soit sensiblement perpendiculaire à l'axe du faisceau laser focalisé. Cette plaque est traversée par un évidement entourant le point de focalisation 4 et par lequel passe le faisceau laser focalisé, ceci afin d'éviter l'attaque de la plaque 5 par le faisceau laser. De part et d'autre de la plaque 5 sont disposées une paire 7 de rouleaux 7a et 7b et une paire 8 de rouleaux 8a et 8b, de telle sorte que les axes des rouleaux soient parallèles entre eux dans chaque paire et d'une paire à l'autre et que le plan déterminé par la génératrice de contact des rouleaux 7a et 7b de la paire 7 et la génératrice de contact des rouleaux 8a et 8b de la paire 8 contienne la face 6 de la plaque 5. Chaque paire de rouleaux est équipée de moyens conventionnels, non représentés, de réglage de l'espacement entre les rouleaux de la paire considérée. D'un côté de l'ensemble formé par la plaque 5 encadrée par les paires 7 et 8 de rouleaux est disposé un rouleau dévidoir 9 monté libre en rotation sur son axe et sur lequel est stocké l'ensemble multicouche 10 devant être découpé, tandis que de l'autre côté dudit ensemble sont placés un premier rouleau bobinoir 11 et un second rouleau bobinoir 12, entrainés en rotation par un moteur non représenté et sur chacun desquels sont enroulées les bandes 13 et 14 découpées d'ensemble multicouche, les axes desdits rouleau dévidoir 9 et rouleaux bobinoirs 11 et 12 étant parallèles aux axes des rouleaux des paires 7 et 8 de rouleaux. Un système de soufflage de gaz 15 comporte une buse 16 disposée dans une zone entre le système de focalisation 2 et le point de focalisation 4 et débouchant au voisinage dudit point de focalisation, cette buse 16 étant reliée par un conduit 17 à une alimentation en gaz non représentée. Un système d'aspiration des fumées 18 comporte une bouche d'aspiration 19 dont l'entrée est disposée en sous-face de la plaque support 5, en regard du point 4 de focalisation du faisceau laser, et la sortie est reliée par un conduit 20 à des moyens d'aspiration non représentés. L'ensemble multicouche 10 à découper stocké sur le dévidoir 9 passe entre les rouleaux 7a et 7b de la paire de rouleaux 7 et s'appuie sur la face 6 de la plaque support 5, tandis que les bandes 13 et 14 formées au cours de la découpe de l'ensemble multicouche 10 par le faisceau laser passent entre les rouleaux 8a et 8b de la paire 8 de rouleaux puis sont enroulées respectivement sur les bobinoirs 11 et 12 entraînés en rotation par un moteur, ce qui assure un défilement continu de l'ensemble multicouche 10 et des bandes découpées 13 et 14 dans le sens de la flèche.

Le dispositif décrit ci-dessus est utilisé de la manière suivante. L'ensemble multicouche 10 à découper, stocké sur le dévidoir 9, est amené à passer entre les rouleaux 7a et 7b de la paire 7 de rouleaux et entre les rouleaux 8a et 8b de la paire 8 de rouleaux et les bandes 13 et 14 résultant de la découpe sont enroulées sur les bobinoirs 11 et 12 correspondants, ce qui assure un défilement continu de l'ensemble multicouche à découper, dans le sens de la flèche. Le faisceau laser émis par la source 1 est focalisé, par le système de focalisation 2, sur la face supérieure de l'ensemble multicouche 10 a découper, c'est-à-dire sensiblement sur le plan de la face 6 de la plaque support 5, tandis qu'un gaz de composition contrôlée pour générer une atmosphère contrôlée réactive est soufflé par la buse 16 sur l'ensemble multicouche au voisinage du point de focalisation 4 du faisceau laser et que les moyens d'aspiration du système d'aspiration 18 sont connectés. L'énergie contenue dans le faisceau laser, qui est concentrée au point de focalisation dudit faisceau, entraîne une désintégration ponctuelle de la matière de l'ensemble multicouche au point d'impact dudit faisceau avec ledit ensemble multicouche, ledit point d'impact étant sensiblement confondu avec le point de focalisation du faisceau laser, ce qui amène le faisceau laser à traverser l'ensemble multicouche 10 et conduit, du fait du défilement de l'ensemble multicouche, à une découpe de cet ensemble, dans le sens de défilement (sens de la flèche), en les deux bandes 13 et 14. Le soufflage du gaz par la buse 16 maintient, au voisinage du point d'impact du faisceau laser sur l'ensemble multicouche, une atmosphère contrôlée réactive, qui permet d'éviter toute inflammation de la matière de l'ensemble multicouche. Les fumées ainsi que tous les résidus, tels que le métal fondu formé au voisinage du faisceau laser le long de la découpe, sont éliminés par l'effet conjugué du soufflage du gaz par la buse 16 et de l'aspiration produite par le système d'aspiration 18.

Pour compléter la description de l'invention, qui vient d'être fournie, on donne ci-après, un exemple de réalisation d'une découpe selon l'invention.

### EXEMPLE :

On réalisait des essais de découpe d'un générateur électrochimique en couches minces se présentant sous la forme d'une feuille multicouche comportant, accolés dans cet ordre:
- un film protecteur en polypropylène ayant 20 µm d'épaisseur,
- une première couche d'électrode positive d'épaisseur 20 µm,
- une première couche d'électrolyte solide polymère ayant une épaisseur de 30 µm,
- une feuille de lithium de 30 µm d'épaisseur formant l'électrode négative,
- une seconde couche d'électrolyte solide polymère de 30 µm d'épaisseur,
- une seconde couche d'électrode positive d'épaisseur 20 µm, et
- un feuillard d'aluminium ayant une épaisseur égale à 20 µm à titre de collecteur d'électrode positive.

Chaque couche d'électrolyte solide polymère consistait en une solution solide à 10 % en poids de LiClO₄ dans un copolymère d'oxyde d'éthylène et de méthylglycidyléther, ledit copolymère renfermant, en poids, 80 % d'oxyde d'éthylène.

Chaque couche d'électrode positive était formée d'un mélange homogène de poudre de sulfure de titane, de noir de carbone et d'un électrolyte solide polymère identique à celui défini pour les couches d'électrolyte solide polymère.

Les essais de découpe étaient mis en oeuvre en faisant appel à un dispositif ayant une structure similaire à celle du dispositif schématisé sur la figure et comportant une source laser à CO₂ dont la puissance maximale disponible était d'environ 500 W.

Le générateur multicouche à découper était placé sur le dévidoir 9 de manière à être attaqué par le faisceau laser du côté du film protecteur en polypropylène. Le gaz soufflé par la buse 16 du système de soufflage 15 consistait en CO₂, ce qui conduisait à la création d'une atmosphère réactive dans le voisinage du point d'impact du faisceau laser sur le générateur à découper.

Les essais de découpe ont été effectués en utilisant un faisceau laser continu ou un faisceau laser pulsé.

Une vitesse de découpe de 25 cm/s a été atteinte pour des puissances inférieures à 400 W selon le cas.

De plus, la présence d'une atmosphère de CO₂ au voisinage du point d'impact du faisceau laser sur la surface du générateur à découper, c'est-à-dire dans la zone de découpe, conduit à la formation d'une couche isolante superficielle de carbonate de lithium sur les tranches en regard des bandes découpées 13 et 14.

Les générateurs électrochimiques découpés comme indiqué dans l'exemple n'ont pas montré de différence significative de comportement, lors de leur usage ultérieur, par rapport à des générateurs électrochimiques de mêmes composition et géométrie pour lesquels on a procédé à la découpe préalable de chacun des éléments constitutifs et on a vérifié la qualité de la découpe avant l'assemblage final desdits éléments. Par contre, pour des générateurs électrochimiques similaires découpés à l'aide de ciseaux à partir de feuilles multicouches identiques à celles de l'exemple, on a pu observer l'apparition de courts-circuits, lors d'usages prolongés ou répétitifs.

## Revendications

1. Procédé pour réaliser la découpe, à un format désiré, d'un ensemble multicouche (10) constitué d'une pluralité de couches minces et consistant en un générateur électrochimique en couches minces ou en une partie constitutive d'un tel générateur, ledit ensemble multicouche comportant au moins une couche qui est constituée d'un feuillard métallique ou renferme un matériau macromoléculaire, ledit procédé étant du type dans lequel on focalise (1,2) au moins un faisceau laser sur l'une des faces de l'ensemble à découper, en un point (4) de cette face appartenant au profil de découpe à effectuer et appelé point d'impact dudit faisceau sur ladite face, de manière à réaliser en ce point une désintégration ponctuelle de la matière dudit ensemble et l'on anime (11,12) le faisceau laser d'un mouvement relatif par rapport à l'ensemble à découper de telle sorte que ledit point d'impact décrive une trajectoire correspondant au profil de découpe à réaliser, et il se caractérise en ce que l'on maintient (15,16) une atmosphère contrôlée dans une zone entourant ce point d'impact, laquelle atmosphère contrôlée est une atmosphère qui réagit avec l'un au moins des composants de l'ensemble multicouche pour former, sur la tranche de la partie d'ensemble découpée, une couche protectrice électroniquement isolante ou bien ioniquement isolante ou les deux.

2. Procédé selon la revendication 1, caractérisé en ce que le mouvement relatif du faisceau laser par rapport à l'ensemble à découper est produit soit en maintenant immobile le faisceau laser et en déplaçant l'ensemble à découper ou en déplaçant le faisceau laser et en maintenant immobile l'ensemble à découper ou bien encore en déplaçant à la fois le faisceau laser et l'ensemble à découper.

3. Procédé selon la revendication 1 ou 2, caractérisé en ce que l'on utilise un faisceau laser continu ou un faisceau laser pulsé.

4. Procédé selon l'une des revendications 1 à 3, caractérisé en ce que le faisceau laser est émis par une source laser à gaz, une source laser à solide, une source laser à semi-conducteur ou encore une source laser à colorant organique.

5. Procédé selon l'une des revendications 1 à 3, caractérisé en ce que le faisceau laser est émis par une source laser à gaz, ayant une puissance inférieure à 1000 W.

6. Procédé selon la revendication 5, caractérisé en ce que la source laser à gaz est une source laser à CO₂.

7. Procédé selon la revendication 5 ou 6, caractérisé en ce que la source laser à gaz a une puissance comprise entre 0,5 et 600 W.

8. Procédé selon l'une des revendications 1 à 7, caractérisé en ce que la vitesse de découpe, qui correspond à la vitesse de déplacement relatif du point d'impact du faisceau laser sur la face de l'ensemble à découper, a une valeur allant d'environ 1 cm/s à 1 m/s.

9. Procédé selon l'une des revendications 1 à 8, caractérisé en ce que l'atmosphère contrôlée réactive renferme une quantité contrôlée d'un agent oxydant gazeux, ladite quantité étant choisie de manière à permettre la formation du ou des composés chimiques constituant la couche protectrice désirée sans que l'atmosphère réactive devienne globalement oxydante.

10. Procédé selon l'une des revendications 1 à 9, caractérisé en ce que l'ensemble multicouche à découper est un générateur électrochimique en couches minces au lithium à électrolyte solide polymère ou encore une partie constitutive d'un tel générateur.

11. Procédé selon l'une des revendications 1 à 9, caractérisé en ce que l'ensemble multicouche à découper est un générateur électrochimique en couches minces au lithium à électrolyte solide polymère ou un précurseur renfermant du lithium d'un tel générateur et en ce que l'atmosphère contrôlée réactive est constituée en totalité ou en partie de CO₂ qui réagit avec le lithium de l'ensemble multicouche à l'endroit de la découpe pour former une couche protectrice de carbonate de lithium électrochimiquement inerte.

12. Procédé selon la revendication 11, caractérisé en ce que l'atmosphère contrôlée réactive renferme un gaz inerte en plus du CO₂.

13. Procédé selon la revendication 11, caractérisé en ce que l'atmosphère contrôlée réactive contenant du CO₂ renferme également un gaz inerte et de l'oxygène.

14. Procédé selon la revendication 9, caractérisé en ce que ledit agent oxydant gazeux est l'oxygène.

## Claims

1. Process for cutting up to a required format a multilayered assembly (10) constituted by a plurality of thin layers and consisting of an electrochemical generator in thin layers or of a part constituting a generator of this type, the multilayered assembly comprising at least one layer which consists of a metal strip or contains a macromolecular material, the process being of the type in which at least one laser beam is focused (1, 2) on one of the faces of the assembly to be cut up, at a point (4) of this face forming part of the profile to be cut up and known as the point of impact of the beam on the face, so as to bring about localised disintegration of the material of the assembly at this point, and the laser beam (11, 12) is moved by a relative movement with respect to the assembly to be cut up such that the point of impact describes a trajectory corresponding to the profile to be cut out, and is characterised in that a controlled atmosphere is maintained (15, 16) in an area surrounding this point of impact, said controlled atmosphere being an atmosphere which reacts with at least one of the components of the multilayered assembly to form a protective layer which is electronically insulating or ionically insulating or both on the cut edge of the cut-out part of the assembly.

2. Process according to Claim 1, characterised in that the relative movement of the laser beam with respect to the assembly to be cut up is produced either by keeping the laser beam immobile and by moving the assembly to be cut up or by moving the laser beam and by keeping the assembly to be cut up immobile or by moving both the laser beam and the assembly to be cut up.

3. Process according to Claim 1 or 2, characterised in that a continuous laser beam or a pulsed laser beam is used.

4. Process according to any one of Claims 1 to 3, characterised in that the laser beam is emitted by a gas laser source, a solid laser source, a semiconductor laser source or even an organic colorant laser source.

5. Process according to any one of Claims 1 to 3, characterised in that the laser beam is emitted by a gas laser source of which the power is less than 1000 W.

6. Process according to Claim 5, characterised in that the gas laser source is a CO₂ laser source.

7. Process according to Claim 5 or 6, characterised in that the power of the gas laser source is between 0.5 and 600 W.

8. Process according to any one of Claims 1 to 7, characterised in that the value of the cutting speed, which corresponds to the relative speed of displacement of the point of impact of the laser beam on the face of the assembly to be cut up, ranges from approximately 1 cm/s to 1 m/s.

9. Process according to any one of Claims 1 to 8, characterized in that the controlled reactive atmosphere contains a controlled amount of a gaseous oxidising agent, the amount being selected so as to enable the chemical compound or compounds constituting the required protective layer to form without the reactive atmosphere becoming totally oxidising.

10. Process according to any one of Claims 1 to 9, characterised in that the multilayered assembly to be cut up is a thin-layered lithium electrochemical generator having a solid polymer electrolyte or even a constituent part of a generator of this type.

11. Process according to any one of Claims 1 to 9, characterized in that the multilayered assembly to be cut up is a thin-layered lithium electrochemical generator having a solid polymer electrolyte or a lithium-containing precursor of a generator of this type; and in that the controlled reactive atmosphere consists totally or partially of CO₂ which reacts with the lithium of the multilayered assembly at the location of the cut-out so as to form a protective layer of electrochemically inert lithium carbonate.

12. Process according to Claim 11, characterised in that the controlled reactive atmosphere contains an inert gas in addition to CO₂.

13. Process according to Claim 11, characterised in that the controlled reactive atmosphere containing CO₂ also contains an inert gas and oxygen.

14. Process according to Claim 9, characterised in that the gaseous oxidising agent is oxygen.

## Patentansprüche

1. Verfahren zum Durchführen des Beschneidens einer mehrschichtigen Anordnung (10), die aus einer Vielzahl dünner Schichten gebildet wird und die aus einem elektrochemischen Generator aus dünnen Schichten oder einem Bestandteil eines solchen Generators besteht, auf ein gewünschtes Format, wobei die mehrschichtige Anordnung wenigstens eine Schicht aufweist, die aus einem Metallband besteht oder ein makromolekurares Material umfaßt, wobei das Verfahren so geartet ist, daß wenigstens ein Laserstrahl auf eine der Flächen der zu beschneidenden Anordnung an einem Punkt (4) dieser zum Profil des auszuführenden Schnitts gehörenden Fläche, der Auftreffpunkt des Strahls auf der Fläche genannnt wird, fokussiert (1, 2) wird, so daß an diesem Punkt eine punktuelle Auflösung der Materie der Anordnung durchgeführt wird und der Laserstrahl mit einer relativen Bewegung im Verhältnis zu der zu schneidenden Anordnung so bewegt wird (11, 12), daß der Auftreffpunkt eine Bahn beschreibt, die dem Profil des durchzuführenden Schnitts entspricht, dadurch gekennzeichnet, daß in einer diesen Auftreffpunkt umgebenden Zone eine kontrollierte Atmosphäre gehalten wird (15, 16), welche eine Atmosphäre ist, die mit mindestens einem der Bestandteile der mehrschichtigen Anordnung reagiert, um auf der Schnittfläche des beschnittenen Teils der Anordnung eine Schutzschicht zu bilden, die elektronisch isolierend oder ionisch isolierend oder beides ist.

2. Verfahren nach Anspruch 1, dadurch gekennzeichnet, daß die relative Bewegung des Laserstrahls im Verhältnis zu der zu beschneidenden Anordnung, dadurch bewirkt wird, daß entweder der Laserstrahl unbeweglich gehalten und die zu beschneidende Anordnung bewegt wird oder der Laserstrahl bewegt wird und die zu beschneidende Anordnung unbeweglich gehalten, oder aber gleichzeitig der Laserstrahl und die zu beschneidende Anordnung bewegt werden.

3. Verfahren nach Anspruch 1 oder 2, dadurch gekennzeichnet, daß ein kontinuierlicher Laserstrahl oder ein gepulster Laserstrahl verwendet wird.

4. Verfahren nach einem der Ansprüche 1 bis 3, dadurch gekennzeichnet, daß der Laserstrahl von einer Gaslaserquelle, einer Feststofflaserquelle, einer Halbleiterlaserquelle oder auch von einer Laserquelle auf der Basis eines organischen Farbstoffs emittiert wird.

5. Verfahren nach einem der Ansprüche 1 bis 3, dadurch gekennzeichnet, daß der Laserstrahl von einer Gaslaserquelle mit einer Leistung von weniger als 1000 W emittiert wird.

6. Verfahren nach Anspruch 5, dadurch gekennzeichnet, daß die Gaslaserquelle eine CO₂-Laserquelle ist.

7. Verfahren nach Anspruch 5 oder 6, dadurch gekennzeichnet, daß die Gaslaserquelle eine Leistung zwischen 0,5 und 600 W hat.

8. Verfahren nach einem der Ansprüche 1 bis 7, dadurch gekennzeichnet, daß die Schneidegeschwindigkeit, die der Geschwindigkeit der relativen Bewegung des Auftreffpunktes des Laserstrahls auf der Fläche der zu beschneidenden Anordnung entspricht, einen Wert von ungefähr 1 cm/s bis 1 m/s hat.

9. Verfahren nach einem der Ansprüche 1 bis 8, dadurch gekennzeichnet, daß die reaktive kontrollierte Atmosphäre eine kontrollierte Menge eines gasförmigen Oxidationsmittels enthält, wobei die Menge so gewählt ist, daß sie die Bildung der chemischen Verbindung oder Verbindungen erlaubt, die die gewünschte Schutzschicht bildet oder bilden, ohne daß die reaktive Atmosphäre insgesamt oxidierend wird.

10. Verfahren nach einem der Ansprüche 1 bis 9, dadurch gekennzeichnet, daß die zu beschneidende mehrschichtige Anordnung ein elektrochemischer Generator aus dünnen Schichten aus Lithium mit einem polymeren Feststoffelektrolyten oder aber ein Bestandteil eines solchen Generators ist.

11. Verfahren nach einem der Ansprüche 1 bis 9, dadurch gekennzeichnet, daß die zu beschneidende mehrschichtige Anordnung ein elektrochemischer Generator aus dünnen Schichten aus Lithium mit einem polymeren Feststoffelektrolyten oder einem Precursorstoff ist, der das Lithium eines solchen Generators einschließt, und daß die reaktive kontrollierte Atmosphäre insgesamt oder teilweise aus CO₂ besteht, das mit dem Lithium der mehrschichtigen Anordnung an der Schnittstelle reagiert, um eine Schutzschicht aus elektrochemisch inertem Lithiumkarbonat zu bilden.

12. Verfahren nach Anspruch 11, dadurch gekennzeichnet, daß die reaktive kontrollierte Atmosphäre neben CO₂ ein weiteres Inertgas enthält.

13. Verfahren nach Anspruch 11, dadurch gekennzeichnet, daß die CO₂ enthaltende, reaktive kontrollierte Atmosphäre auch ein Inertgas und Sauerstoff enthält.

14. Verfahren nach Anspruch 9, dadurch gekennzeichnet, daß das gasförmige Oxidationsmittel Sauerstoff ist.
